# EUROPÄISCHE PATENTSCHRIFT

(11) **EP 4 596 908 B1**
(45) Veröffentlichungstag und Bekanntmachung des Hinweises auf die Patenterteilung: **12.08.2026**
(21) Anmeldenummer: 25154966.3
(22) Anmeldetag: 30.01.2025
(51) Int. Cl.: F16C 17/10, F16C 17/26, F16C 33/10

(54) **AERODYNAMISCHES LAGER ZUR AXIALEN UND RADIALEN LAGERUNG EINER WELLE SOWIE TURBOKOMPRESSOR MIT EINEM SOLCHEN LAGER**
AERODYNAMIC BEARING FOR AXIAL AND RADIAL SUPPORT OF A SHAFT AND TURBOCOMPRESSOR HAVING SUCH A BEARING
PALIER AÉRODYNAMIQUE POUR LE MONTAGE AXIAL ET RADIAL D'UN ARBRE ET TURBOCOMPRESSEUR ÉQUIPÉ D'UN TEL PALIER

(30) Priorität: 31.01.2024 DE 102024102696
(43) Veröffentlichungstag der Anmeldung: 06.08.2025
(73) Patentinhaber: ebm-papst Mulfingen GmbH & Co. KG, 74673 Mulfingen (DE)
(72) Erfinder: Carle, Christoph, 74670 Forchtenberg (DE); Handschuh, Philipp, 72622 Nürtingen (DE); Dobrica, Mihai B., 69124 Heidelberg (DE); Wilke, Michael, 74575 Schrozberg (DE)
(74) Vertreter: Staeger & Sperling Partnerschaftsgesellschaft mbB

(56) Entgegenhaltungen:
- EP-A1- 3 495 677
- WO-A1-2023/224168
- US-A1- 2011 243 485
- US-A1- 2011 243 762
- US-A1- 2021 242 747

## Beschreibung

Die Erfindung betrifft ein aerodynamisches Lager zur axialen und radialen Lagerung einer sich entlang einer Rotationsachse erstreckenden Welle für einen Turbokompressor sowie einen Turbokompressor mit einem solchen Lager, wobei es sich hierbei insbesondere um einen ölfreien Hochgeschwindigkeits-Turbokompressor handelt.

Aerodynamische Lager, welche auch als aerostatische Lager oder Luftlager bezeichnet werden, sowie auch ihr Einsatz in Turbokompressoren sind im Stand der Technik bekannt. Unter dem Begriff Turbokompressoren werden Radial-, Axial- sowie Diagonalkompressoren zusammengefasst, wobei insbesondere Radialkompressoren beispielsweise auch als Zentrifugalkompressoren oder Radialverdichter bezeichnet werden können.

Das grundlegende Wirkprinzip solcher aerodynamischen Lager besteht darin, dass die Lagerungspartner durch einen dünnen Gasfilm bzw. ein dünnes Gaspolster getrennt sind, sodass zwischen den Lagerungspartnern eine stick-slip-freie und reibungsfreie Bewegung mit großer Genauigkeit ermöglicht wird.

Bezogen auf Turbokompressoren wird vorzugsweise sowohl eine axiale Lagerung als auch eine radiale Lagerung eines Flügelrades des Kompressors bzw. einer Welle zur Aufnahme des Flügelrades durch aerodynamische Lager realisiert.

Zumeist wird dafür an der Welle eine mit der Welle drehfest verbundene Wellenmanschette vorgesehen, welche zur Ausbildung der axialen Lagerung zwischen zwei Axiallagerscheiben angeordnet ist. Zur Ausbildung der radialen Lagerung ist zudem oftmals eine Radiallagerbuchse vorgesehen.

Dabei ist problematisch, dass die an den Axiallagerscheiben zur axialen Lagerung ausgebildeten Axiallagerflächen möglichst exakt orthogonal zu der Rotationsachse und die an der Radiallagerbuchse zur radialen Lagerung ausgebildete Radiallagerfläche möglichst exakt konzentrisch zu der Rotationsachse angeordnet sein müssen, um bei verschleißfreier Lagerung hohe Drehzahlen zu ermöglichen.

Die notwendige hohe Genauigkeit der Ausrichtung der Lagerflächen zu der Rotationsachse und auch zueinander führt in der Fertigung zu einem entsprechend großen Aufwand mit entsprechend hohen Kosten.

Hinzukommt, dass es auch bei einer im wesentlichen berührungslosen Lagerung der Welle durch aerodynamische Lager im Betrieb zu einer nachteiligen Erwärmung der Welle kommen kann.

Aerodynamische Lager und Aspekte solcher Lager sind insbesondere aus den Schriften US 2021/242747 A1, US 2011/243485 A1, US 2011/243762 A1, EP 3 495 677 A1 und WO 2023/224168 A1 bekannt.

Der Erfindung liegt deshalb die Aufgabe zugrunde, die vorgenannten Nachteile zu überwinden und ein aerodynamisches Lager zur axialen und radialen Lagerung einer Welle insbesondere eines Turbokompressors bereitzustellen, durch welches eine kostengünstige Lagerung der Welle bei hoher Lagergenauigkeit erreicht werden kann.

Diese Aufgabe wird durch die Merkmalskombination gemäß Patentanspruch 1 gelöst.

Erfindungsgemäß wird daher ein aerodynamisches Lager zur axialen und radialen Lagerung einer sich entlang einer Rotationsachse erstreckenden Welle für einen Turbokompressor und insbesondere für einen Hochgeschwindigkeits-Turbokompressor vorgeschlagen. Das erfindungsgemäße Lager weist zwei ringförmige Axiallagerscheiben sowie eine hohlzylinderförmige Radiallagerbuchse auf. Dabei sind die zwei Axiallagerscheiben und die Radiallagerbuchse konzentrisch zu der Rotationsachse angeordnet, wobei die zwei Axiallagerscheiben in Axialrichtung beabstandet sind und in Axialrichtung zwischen sich einen Hohlraum zur Aufnahme einer mit der Welle verbundenen Wellenmanschette bilden. Dabei kann die Wellenmanschette auch als Wellenkragen bezeichnet werden und an der Welle durch beispielsweise ein Befestigungselement fixiert oder integral durch die Welle ausgebildet sein. Die zwei Axiallagerscheiben weisen jeweils eine dem Hohlraum zugewandte Axiallagerfläche zur Ausbildung eines jeweiligen axialen Gaspolsters in einem jeweiligen Axiallagerspalt zwischen der jeweiligen Axiallagerfläche und der Wellenmanschette für die axiale Lagerung der Welle auf. Die Radiallagerbuchse weist nach radialinnen eine Radiallagerfläche zur Ausbildung eines radialen Gaspolsters in einem Radiallagerspalt zwischen der Radiallagerfläche und der Welle für die radiale Lagerung der Welle auf. Erfindungswesentlich ist dabei vorgesehen, dass die Radiallagerbuchse integral und/oder stoffschlüssig mit einer der Axiallagerscheiben ausgebildet ist und dadurch eine Kombilagerbuchse bildet. Die dadurch entsprechend einteilige und einstückige Kombilagerbuchse bildet eine Kombination aus Radiallagerbuchse und einer der Axiallagerscheiben, sodass an ihr sowohl die Radiallagerfläche als auch eine der Axiallagerflächen vorgesehen sind. Die Kombilagerbuchse kann folglich auch als kombinierte Axial-Radiallagerbuchse bezeichnet werden.

Durch das erfindungsgemäß beschriebene Lager ergeben sich mehrere Vorteile, welche auch die oben gestellten Aufgaben lösen. Da eine der Axiallagerscheiben und die Radiallagerbuchse integral miteinander ausgebildet sind, müssen diese nicht mehr zueinander ausgerichtet werden, sodass sowohl die getrennte Anordnung als auch die Ausrichtung zueinander entfallen. Hinzukommt, dass sich bei der Fertigung geringere Toleranzketten ergeben, da nicht eine erste Toleranz für die Axiallagerscheibe und eine zweite Toleranz für die Radiallagerbuchse, sondern lediglich die Toleranz für die Kombilagerbuchse gilt.

Es ergibt sich daher eine größere Genauigkeit bei vereinfachter Herstellung und vereinfachter Montage.

Hinzukommt jedoch vorteilhafterweise auch, dass die Wärmeabfuhr von der Welle nach außen durch die höhere Masse der Kombilagerbuchse verbessert wird.

Im Rahmen der vorliegenden Beschreibung beziehen sich Axialrichtung, Radialrichtung und Umfangsrichtung - soweit nicht im konkreten Fall anders angegeben - auf die Rotationsachse.

Eine vorteilhafte Variante des aerodynamischen Lagers sieht zudem vor, dass in Axialrichtung zwischen den zwei Axiallagerscheiben eine Distanzscheibe angeordnet ist, welche ausgebildet ist, die Axiallagerscheiben in einem vorbestimmten Axialabstand zueinander zu halten und/oder den Hohlraum in Radialrichtung zu begrenzen, sodass die bestimmungsgemäß zwischen den Axiallagerscheiben durch die axialen Gaspolster gelagerte Wellenmanschette rotierbar ist. Die Distanzscheibe ist gemäß der Weiterbildung integral und/oder stoffschlüssig mit der Kombilagerbuchse ausgebildet, wodurch sich wiederum verkürzte Toleranzketten bzw. kleinere Gesamttoleranzen, eine vereinfachte Montage sowie eine verbesserte Wärmeabfuhr ergeben.

Vorzugsweise ist die Distanzscheibe dabei ringförmig und die Wellenmanschette folglich ringförmig umlaufend ausgebildet.

Weiter ist vorzugsweise vorgesehen, dass die Kombilagerbuchse eine hohlzylindrische Form aufweist, deren Länge im Wesentlichen einer axialen Länge der Radiallagerbuchse bzw. der gemeinsamen axialen Länge der Radiallagerbuchse und der Axiallagerscheibe entspricht. Der Außenradius der Kombilagerbuchse entspricht dabei einem Außenradius der Axiallagerscheibe. Dabei ist hohlzylindrische Form vorliegend gerade keine im Schnitt T-förmige Außenkontur zu verstehen. Vielmehr wird durch die hohlzylindrische Form und das damit einhergehende große Volumen der Kombilagerbuchse die Wärmeabfuhr weiter verbessert.

Um eine Kollision der Kombilagerbuchse an einem Übergang der Axiallagerfläche zu der Radiallagerfläche mit der Welle bzw. der Wellenmanschette zu vermeiden bzw. einer solchen vorzubeugen, sieht die Erfindung vor, dass die Axiallagerfläche und die Radiallagerfläche an der Kombilagerbuchse über einen die Rotationsachse konzentrisch umlaufenden und insbesondere konkaven Übergangsbereich übergehen, welcher insbesondere als Freistich ausgebildet ist.

Durch die aerodynamische Lagerung kommt es sowohl in dem Radiallagerspalt bzw. in dem dortigen radialen Gaspolster als auch in dem Axiallagerspalt bzw. in dem dortigen axialen Gaspolster zu hydrodynamischen Effekten, wobei es an einem Übergang zwischen den jeweiligen Lagerflächen bzw. den Gaspolstern zu nachteilhaften Turbulenzen kommen kann. Daher ist gemäß der Erfindung zumindest ein zu der Axiallagerfläche und zu der Radiallagerfläche der Kombilagerbuchse führender erster Entlüftungskanal zur Entkopplung des axialen Gaspolsters und des radialen Gaspolsters vorgesehen.

Der zumindest eine erste Entlüftungskanal führt zu dem Übergangsbereich bzw. in den Freistich, über welchen der zumindest eine erste Entlüftungskanal mit der Axiallagerfläche und der Radiallagerfläche bzw. dem jeweiligen Luftspalt strömungstechnisch verbunden ist.

Weiter ist dabei vorzugsweise vorgesehen, dass der zumindest eine erste Entlüftungskanal von der Radiallagerfläche an eine radialäußere Mantelfläche der Kombilagerbuchse und/oder eine axiale Stirnfläche der Kombilagerbuchse führt, wobei als Stirnfläche eine Fläche an einer von der Axiallagerfläche abgewandten Stirnseite der Kombilagerbuchse zu verstehen ist. Der zumindest eine erste Entlüftungskanal ist zudem insbesondere ausgebildet, einen Umgebungsdruck der Kombilagerbuchse bzw. um die Kombilagerbuchse aufrechtzuerhalten und/oder zu homogenisieren.

Zur Verbesserung der radialen Lagerung und gezielten radialen Abstützung kann zudem vorgesehen sein, dass die Radiallagerfläche der Kombilagerbuchse in zumindest zwei in Axialrichtung beabstandete Radiallagerflächenabschnitte zur Ausbildung eines jeweiligen radialen Gaspolsters in einem jeweiligen Radiallagerspalt zwischen dem jeweiligen Radiallagerflächenabschnitt und der Welle für die radiale Lagerung der Welle geteilt ist.

Hierbei kann weiter vorgesehen sein, dass zumindest ein zwischen insbesondere je zwei Radiallagerflächenabschnitten angeordneter und zu den Radiallagerflächenabschnitten bzw. den jeweiligen Radiallagerspalten führender zweiten Entlüftungskanal zur Entkopplung der angrenzenden bzw. unmittelbar benachbarten radialen Gaspolster vorgesehen ist. Auch der zumindest eine zweite Entlüftungskanal kann vorgesehen sein, den Umgebungsdruck an bzw. um die Kombilagerbuchse aufrechtzuerhalten und/oder zu homogenisieren.

Soweit eine Distanzscheibe vorgesehen und integral und/oder stoffschlüssig mit der Kombilagerbuchse ausgebildet ist, sieht eine vorteilhafte Weiterbildung zudem vor, dass ferner zumindest ein sich in Radialrichtung durch die Distanzscheibe zu zumindest einer der Axiallagerflächen bzw. zu dem jeweiligen Axiallagerspalt erstreckender dritter Entlüftungskanal zur Entkopplung zumindest eines der axialen Gaspolster bzw. der zwei axialen Gaspolster voneinander vorgesehen ist. Der zumindest eine dritte Entlüftungskanal kann wiederum vorgesehen sein, den Umgebungsdruck an bzw. um die Kombilagerbuchse aufrechtzuerhalten und/oder zu homogenisieren.

Vorzugsweise ist die Kombilagerbuchse massiv. Alternativ oder zusätzlich kann die Kombilagerbuchse ausgebildet sein, Wärme von der Axiallagerfläche und der Radiallagerfläche nach radial außen abzuleiten und insbesondere zu einem Kühlmedium und/oder einem Kühlkörper zu leiten. Dabei kann auch insbesondere der Aufnahmekörper integral als Kühlkörper ausgebildet sein und beispielsweise Kühlrippen ausbildet.

Weiter kann das aerodynamisches Lager die drehfest mit der Welle verbundene Wellenmanschette umfassen, welche beispielsweise durch ein Befestigungselement mit der Welle verbunden ist. Alternativ kann das Lager die Welle mit integral daran ausgebildeter und/oder stoffschlüssig mit der Welle verbundener Wellenmanschette umfassen.

Ein weiterer Aspekt der Erfindung betrifft zudem einen Turbokompressor mit einem erfindungsgemäß vorgeschlagenen aerodynamischen Lager. Dabei weist der Turbokompressor, welcher konkret als Axial-, Radial- oder Diagonalkompressor ausgebildet ist, einen beispielsweise als Gehäuse ausgebildeten Aufnahmekörper auf, welcher einen zylinderförmigen Aufnahmeraum zur Aufnahme der Kombilagerbuchse bestimmt. Ferner weist der Turbokompressor sich in Radialrichtung in den Aufnahmeraum erstreckende und vorzugsweise integral d.h. einstückig mit dem Aufnahmekörper ausgebildete Haltestege auf, welche ausgebildet sind, die Kombilagerbuchse in dem Aufnahmeraum konzentrisch zu der Rotationsachse zu halten.

In Umfangsrichtung zwischen den Haltestegen und nach radialinnen von der Kombilagerbuchse begrenzt kann zudem zumindest ein entsprechend in Axialrichtung d.h. parallel der Rotationsachse verlaufender Axialkanal zur Homogenisierung eines um die Kombilagerbuchse herrschenden Umgebungsdrucks vorgesehen sein. Vorzugsweise ist dabei zwischen jeweils zwei benachbarten Haltestegen jeweils ein Axialkanal vorgesehen, wobei diese wiederum insbesondere in Umfangsrichtung gleichmäßig verteilt sind.

Zusätzlich oder alternativ ist in Umfangsrichtung die Haltestege schneidend und nach radialinnen von der Kombilagerbuchse begrenzt zumindest ein entsprechend in Umfangsrichtung verlaufender Umfangskanal zur Homogenisierung eines um die Kombilagerbuchse herrschenden Umgebungsdrucks vorgesehen.

Sowohl für den Axialkanal bzw. die Axialkanäle als auch den Umfangskanal bzw. die Umfangskanäle gilt, dass der zumindest eine erste Entlüftungskanal und/oder der zumindest eine zweite Entlüftungskanal und/oder der zumindest eine dritte Entlüftungskanal in einen der Kanäle bzw. mehrere der Kanäle münden kann.

Vorzugsweise mündet der zumindest eine erste Entlüftungskanal und/oder der zumindest eine zweite Entlüftungskanal und/oder der zumindest eine dritte Entlüftungskanal jeweils in einen Kreuzungspunkt eines Axialkanals mit einem Umfangskanal.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittdarstellung eines ersten aerodynamischen Lagers;
- Fig. 2: eine Schnittdarstellung eines zweiten aerodynamischen Lagers;
- Fig. 3: eine Schnittdarstellung eines dritten aerodynamischen Lagers.

Die Figuren sind beispielhaft schematisch und zeigen jeweils ausschnittsweise Schnittdarstellungen verschiedener aerodynamischer Lager 1 bzw. Schnittdarstellungen von Turbokompressoren mit darin angeordneten bzw. aufgenommenen aerodynamischen Lagern 1. Gleiche Bezugszeichen in den Figuren weisen dabei auf gleiche funktionale und/oder strukturelle Merkmale hin, wobei nicht zwingend auf jedes Merkmal bzw. jedes Bezugszeichen zu jeder Figur Bezug genommen wird.

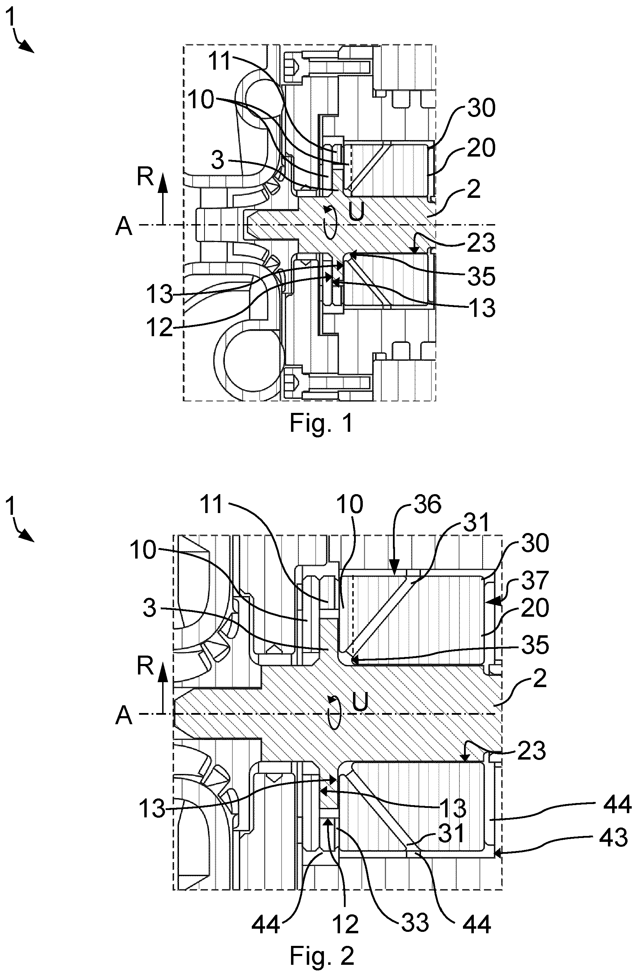

Grundsätzlich gilt für alle Figuren 1 bis 3 bzw. für alle dargestellten aerodynamischen Lager 1, dass diese zur sowohl axialen als auch radialen Lagerung einer sich entlang einer Rotationsachse A erstreckenden Welle 2 ausgebildet sind, wobei die Welle 2 integral eine Wellenmanschette 3 aufweist, welche sich von der Welle 2 in Radialrichtung R nach radialaußen erstreckt.

Für die axiale Lagerung weist das aerodynamische Lager 1 zwei ringförmige Axiallagerscheiben 10 auf, welche durch eine Distanzscheibe 11 in Axialrichtung d.h. entlang der Rotationsachse A beabstandet und in einem vorbestimmten Abstand gehalten werden, sodass ein Hohlraum 12 zur Aufnahme der Wellenmanschette 3 ausgebildet wird.

Bei einer Rotation der Wellenmanschette 3 bzw. der Welle 2 in Umfangsrichtung U um die Rotationsachse A wird entsprechend zwischen der Wellenmanschette 3 und den Axiallagerscheiben 10 bzw. an den Axiallagerscheiben 10 vorgesehene und zu dem Hohlraum 12 weisende Axiallagerfläche 13 ein Luft- bzw. Gaspolster aufgebaut.

Zur radialen Lagerung weist das aerodynamische Lager 1 ferner einen die Welle 2 ringförmig umlaufende und hohlzylindrisch ausgebildete Radiallagerbuchse 20 mit einer radial inneren Radiallagerfläche 23 auf, sodass zwischen der Radiallagerfläche 23 der Radiallagerbuchse 20 und der Welle 2 bzw. einer an dieser vorgesehenen Radiallagerfläche ebenfalls ein Gas- bzw. Luftpolster ausgebildet werden kann.

Dabei werden die axiale Lagerung und die radiale Lagerung im Stand der Technik meist getrennt, was verschiedene Nachteile hat.

Erfindungsgemäß und wie in den Figuren 1 bis 3 dargestellt, wird insbesondere vorgeschlagen, dass die Radiallagerbuchse 20 integral mit einer der Axiallagerscheiben 10 als eine Kombilagerbuchse 30 ausgebildet ist, was einerseits zu einer Bauraumersparnis und andererseits zu einer verbesserten Kühlung führt, da die an Axiallagerscheibe 10 und die an der Radiallagerbuchse 20 entstehende Wärme einfacher und besser abgeführt werden kann. Hinzukommt, dass die Ausrichtung der Axiallagerscheibe 10 bzw. der Radiallagerbuchse 20 entfällt, da diese gemeinsam als Kombilagerbuchse 30 angeordnet und ausgerichtet werden.

Um einerseits eine Kollision der Axiallagerscheibe 10 der Kombilagerbuchse 30 bzw. deren Axiallagerfläche 13 bzw. eine Kollision der Radiallagerbuchse 20 der Kombilagerbuchse 30 bzw. deren Radiallagerfläche 23 mit der Wellenmanschette 3 zu verhindern und andererseits ein Gaspolster an der Axiallagerfläche 13 von einem Gaspolster an der Radiallagerfläche zu entkoppeln ist zudem jeweils ein konkaver und als Freistich ausgebildeter Übergangsbereich 35 realisiert, sodass die Axiallagerfläche 13 und die Radiallagerfläche 23 des Kombilagerbuchse 30 also nicht unmittelbar aneinander angrenzen.

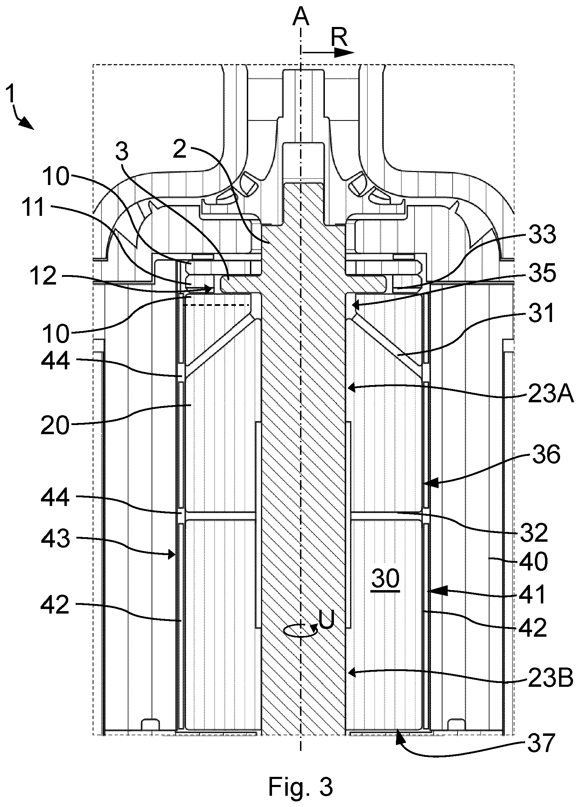

Für die Funktion des aerodynamischen Lagers 1 ist es vorteilhaft, dass die jeweiligen Lagerflächen, d.h. die Axiallagerflächen 13 und die Radiallagerfläche 23 in bestimmungsgemäßer Wirkverbindung mit einer Umgebung des Lagers 1 stehen, sodass die Druckverteilung an den Lagerflächen 13, 23 bestimmungsgemäß erhalten und gleichmäßig bleibt. Hierfür sind, wie insbesondere in den Figuren 2 und 3 dargestellt, Entlüftungskanäle 31, 32, 33 vorgesehen, durch welche ein Umgebungsdruck um das aerodynamische Lager 1 und die Druckverteilung an den Lagerflächen 13, 23 homogenisiert werden.

Ein erster Entlüftungskanal 31 verbindet dabei eine radialäußere Mantelfläche 36 bzw. über diese auch eine axiale Stirnfläche 37 der Kombilagerbuchse 30 mit dem Übergangsbereich 35.

Weiter ist in Figur 2 und 3 auch jeweils ein dritter Entlüftungskanal 33 dargestellt, welcher den Hohlraum 33 mit der Umgebung des aerodynamischen Lagers 1 verbindet.

Das aerodynamische Lager 1 betreffend ist in Figur 3 zudem eine Variante mit einer verbesserten radialen Abstützung vorgesehen, in welcher die Radiallagerfläche 23 in zwei entlang der Rotationachse A beabstandete Abschnitte 23A, 23B geteilt ist, wobei diese jeweils einen Teil der Radiallagerfläche 23 oder jeweils eine Radiallagerfläche 23 bereitstellen.

Zur Druckentkopplung der Radiallagerflächen 23 der Radiallagerabschnitte 23A, 23B ist zwischen diesen wiederum ein zweiter Entlüftungskanal 32 vorgesehen, welcher nach radialaußen an die Mantelfläche 36 der Kombibuchse 30 führt.

Für alle Figuren 1 bis 3 gilt, dass jeweils ein Ausschnitt eines Turbokompressors dargestellt ist, welcher jedoch in Figur 3 besonders gut erkennbar ist. Der Turbokompressor weist dabei einen auch als Gehäuse oder Innengehäuse bezeichenbaren Aufnahmekörper 40 mit einem Aufnahmeraum 41 zur Aufnahme des aerodynamischen Lagers 1 auf. In den Aufnahmeraum 41 hinein erstrecken sich Haltestege 42, welche die Kombilagerbuchse 30 konzentrisch zu der Rotationsachse A halten.

Dabei ist in Axialrichtung d.h. parallel zu der Rotationsachse A zwischen den Haltestegen 42 jeweils ein Axialkanal 43 zur Homogenisierung des in dem Aufnahmeraum 41 herrschenden Umgebungsdrucks vorgesehen, wobei hierzu zusätzlich auch die Haltestege 42 in Umfangsrichtung U schneidende Umfangskanäle 44 vorgesehen sind, welche zudem vorzugsweise unmittelbar mit den Entlüftungskanälen 31, 32, 33 wirkverbunden sind, d.h. an diese angrenzen.

Die Erfindung beschränkt sich in ihrer Ausführung nicht auf die vorstehend angegebenen bevorzugten Ausführungsbeispiele. Die Erfindung ist durch die angehängten Ansprüche definiert.

## Patentansprüche

1. Aerodynamisches Lager (1) zur axialen und radialen Lagerung einer sich entlang einer Rotationsachse (A) erstreckenden Welle (2) für einen Turbokompressor,
aufweisend zwei ringförmige Axiallagerscheiben (10) sowie eine hohlzylinderförmige Radiallagerbuchse (20),
wobei die zwei Axiallagerscheiben (10) und die Radiallagerbuchse (20) konzentrisch zu der Rotationsachse (A) angeordnet sind,
wobei die zwei Axiallagerscheiben (10) in Axialrichtung beabstandet sind und in Axialrichtung zwischen sich einen Hohlraum (12) zur Aufnahme einer mit der Welle (2) verbundenen Wellenmanschette (3) bilden,
wobei die zwei Axiallagerscheiben (10) jeweils eine dem Hohlraum (12) zugewandte Axiallagerfläche (13) zur Ausbildung eines jeweiligen axialen Gaspolsters in einem jeweiligen Axiallagerspalt zwischen der jeweiligen Axiallagerfläche (13) und der Wellenmanschette (3) für die axiale Lagerung der Welle (2) aufweisen,
wobei die Radiallagerbuchse (20) nach radialinnen eine Radiallagerfläche (23) zur Ausbildung eines radialen Gaspolsters in einem Radiallagerspalt zwischen der Radiallagerfläche (23) und der Welle (2) für die radiale Lagerung der Welle (2) aufweist,
wobei die Radiallagerbuchse (20) integral und/oder stoffschlüssig mit einer der Axiallagerscheiben (10) als eine Kombilagerbuchse (30) ausgebildet ist und
wobei die Axiallagerfläche (13) und die Radiallagerfläche (23) an der Kombilagerbuchse (30) über einen die Rotationsachse (A) konzentrisch umlaufenden Übergangsbereich (35) übergehen,
**dadurch gekennzeichnet, dass**
das aerodynamische Lager ferner zumindest einen zu der Axiallagerfläche (13) und zu der Radiallagerfläche (23) der Kombilagerbuchse (30) führenden ersten Entlüftungskanal (31) zur Entkopplung des axialen Gaspolsters und des radialen Gaspolsters aufweist, welcher zu dem Übergangsbereich (35) führt, über welchen der zumindest eine erste Entlüftungskanal (31) mit der Axiallagerfläche (13) und der Radiallagerfläche (23) strömungstechnisch verbunden ist.

2. Aerodynamisches Lager nach Anspruch 1,
wobei die Kombilagerbuchse (30) eine hohlzylindrische Form aufweist, deren Länge einer gemeinsamen axialen Länge der Radiallagerbuchse (20) und der Axiallagerscheibe (10) und deren Außenradius einem Außenradius der Axiallagerscheibe (10) entspricht.

3. Aerodynamisches Lager nach Anspruch 1 oder 2,
wobei in Axialrichtung zwischen den zwei Axiallagerscheiben (10) eine Distanzscheibe (11) angeordnet ist, welche ausgebildet ist, die Axiallagerscheiben (10) in einem vorbestimmten Axialabstand zueinander zu halten und/oder den Hohlraum (12) in Radialrichtung (R) zu begrenzen, sodass die bestimmungsgemäß zwischen den Axiallagerscheiben (10) durch die axialen Gaspolster gelagerte Wellenmanschette (3) rotierbar ist,
und wobei die Distanzscheibe (11) integral und/oder stoffschlüssig mit der Kombilagerbuchse (30) ausgebildet ist.

4. Aerodynamisches Lager nach einem der vorhergehenden Ansprüche, wobei der Übergangsbereich (35) konkav ist.

5. Aerodynamisches Lager nach einem der vorhergehenden Ansprüche, wobei der Übergangsbereich (35) als Freistich ausgebildet ist.

6. Aerodynamisches Lager nach einem der vorhergehenden Ansprüche,
wobei der zumindest eine erste Entlüftungskanal (31) von der Radiallagerfläche (23) an eine radialäußere Mantelfläche (36) und/oder eine axiale Stirnfläche (37) der Kombilagerbuchse (30) führt.

7. Aerodynamisches Lager nach dem vorhergehenden Anspruch,
wobei der zumindest eine erste Entlüftungskanal (31) ausgebildet ist, einen Umgebungsdruck der Kombilagerbuchse (30) aufrechtzuerhalten.

8. Aerodynamisches Lager nach einem der vorhergehenden Ansprüche,
wobei die Radiallagerfläche (23) der Kombilagerbuchse (30) in zumindest zwei in Axialrichtung beabstandete Radiallagerflächenabschnitte (23A, 23B) zur Ausbildung eines jeweiligen radialen Gaspolsters zwischen dem jeweiligen Radiallagerflächenabschnitt (23A, 23B) und der Welle (2) für die radiale Lagerung der Welle (2) geteilt ist.

9. Aerodynamisches Lager nach dem vorhergehenden Anspruch,
ferner aufweisend zumindest einen zwischen insbesondere je zwei Radiallagerflächenabschnitten (23A, 23B) angeordneten und zu den Radiallagerflächenabschnitten (23A, 23B) führenden zweiten Entlüftungskanal (32) zur Entkopplung der angrenzenden radialen Gaspolster.

10. Aerodynamisches Lager nach einem der vorhergehenden Ansprüche 3 bis 9,
ferner aufweisend zumindest einen sich in Radialrichtung (R) durch die Distanzscheibe (11) zu zumindest einer der Axiallagerflächen (13) erstreckenden dritten Entlüftungskanal (33) zur Entkopplung zumindest eines der axialen Gaspolster.

11. Aerodynamisches Lager nach einem der vorhergehenden Ansprüche,
wobei die Kombilagerbuchse (30) massiv ist
und/oder wobei die Kombilagerbuchse ausgebildet ist, Wärme von der Axiallagerfläche (13) und der Radiallagerfläche (23) nach radial außen abzuleiten und insbesondere zu einem Kühlmedium und/oder einem Kühlkörper zu leiten.

12. Aerodynamisches Lager nach einem der vorhergehenden Ansprüche,
ferner umfassend die mit der Welle (2) verbundene Wellenmanschette (3)
oder ferner umfassend die Welle (2) mit integral daran ausgebildeter und/oder stoffschlüssig mit dieser verbundener Wellenmanschette (3).

13. Aerodynamisches Lager nach einem der vorhergehenden Ansprüche 1 bis 11,
ferner umfassend die durch ein Befestigungselement drehfest mit der Welle (2) verbundene Wellenmanschette (3).

14. Turbokompressor mit einem aerodynamischen Lager nach einem der vorhergehenden Ansprüche,
aufweisend einen Aufnahmekörper (40), welcher einen zylinderförmigen Aufnahmeraum (41) zur Aufnahme der Kombilagerbuchse (30) bestimmt, ferner aufweisend sich in Radialrichtung (R) in den Aufnahmeraum (41) erstreckende Haltestege (42), welche ausgebildet sind, die Kombilagerbuchse (30) in dem Aufnahmeraum (40) konzentrisch zu der Rotationsachse (R) zu halten.

15. Turbokompressor nach dem vorhergehenden Anspruch,
wobei in Umfangsrichtung (U) zwischen den Haltestegen (42) und nach radialinnen von der Kombilagerbuchse (30) begrenzt zumindest ein Axialkanal (43) zur Homogenisierung eines um die Kombilagerbuchse (30) herrschenden Umgebungsdrucks vorgesehen ist,
und/oder wobei in Umfangsrichtung (U) die Haltestege (42) schneidend und nach radialinnen von der Kombilagerbuchse (30) begrenzt zumindest ein Umfangskanal (44) zur Homogenisierung eines um die Kombilagerbuchse herrschenden Umgebungsdrucks vorgesehen ist.

## Claims

1. An aerodynamic bearing (1) for the axial and radial mounting of a shaft (2) extending along a rotation axis (A) for a turbo compressor,
having two annular axial bearing disks (10) and a hollow cylindrical radial bearing bush (20),
wherein the two axial bearing disks (10) and the radial bearing bush (20) are arranged concentrically to the rotation axis (A),
wherein the two axial bearing disks (10) are spaced apart in the axial direction and form a cavity (12) between them in the axial direction for receiving a shaft sleeve (3) connected to the shaft (2),
wherein the two axial bearing disks (10) each have an axial bearing surface (13) facing the cavity (12) for forming a respective axial gas cushion in a respective axial bearing gap between the respective axial bearing surface (13) and the shaft sleeve (3) for the axial mounting of the shaft (2),
wherein the radial bearing bush (20) has a radial bearing surface (23) radially inward for forming a radial gas cushion in a radial bearing gap between the radial bearing surface (23) and the shaft (2) for the radial mounting of the shaft (2),
wherein the radial bearing bush (20) is formed integrally and/or materially with one of the axial bearing disks (10) as a combination bearing bush (30) and
wherein the axial bearing surface (13) and the radial bearing surface (23) on the combination bearing bush (30) transition through a transition region (35) which runs concentrically around the rotation axis (A),
**characterized in that**
the aerodynamic bearing (1) further has at least one first venting channel (31) leading to the axial bearing surface (13) and to the radial bearing surface (23) of the combination bearing bush (30) for decoupling the axial gas cushion and the radial gas cushion, the at least one first venting channel (31) leading to the transition region (35), via which the at least one first venting channel (31) is fluidically connected to the axial bearing surface (13) and the radial bearing surface (23).

2. The aerodynamic bearing according to claim 1,
wherein the combination bearing bush (30) has a hollow cylindrical shape, the length of which corresponds to a common axial length of the radial bearing bush (20) and the axial bearing disk (10) and the outer radius of which corresponds to an outer radius of the axial bearing disk (10).

3. The aerodynamic bearing according to claim 1 or 2,
wherein a spacer disk (11) is arranged in the axial direction between the two axial bearing disks (10), which spacer disk is designed to hold the axial bearing disks (10) at a predetermined axial distance from one another and/or to delimit the cavity (12) in the radial direction (R), so that the shaft sleeve (3), when mounted as intended between the axial bearing disks (10) by the axial gas cushions, is rotatable,
and wherein the spacer disk (11) is formed integrally and/or materially with the combination bearing bush (30).

4. The aerodynamic bearing according to any one of the preceding claims,
wherein the transition region (35) is concave.

5. The aerodynamic bearing according to any one of the preceding claims,
wherein the transition region (35) is designed as an undercut.

6. The aerodynamic bearing according to any one of the preceding claims,
wherein the at least one first venting channel (31) leads from the radial bearing surface (23) to a radially outer circumferential surface (36) and/or an axial end face (37) of the combination bearing bush (30).

7. The aerodynamic bearing according to the preceding claim,
wherein the at least one first venting channel (31) is designed to maintain an ambient pressure of the combination bearing bush (30).

8. The aerodynamic bearing according to any one of the preceding claims,
wherein the radial bearing surface (23) of the combination bearing bush (30) is divided into at least two radial bearing surface portions (23A, 23B) spaced apart in the axial direction for forming a respective radial gas cushion between the respective radial bearing surface portion (23A, 23B) and the shaft (2) for the radial mounting of the shaft (2).

9. The aerodynamic bearing according to the preceding claim,
further having at least one second venting channel (32) arranged in particular between two radial bearing surface portions (23A, 23B) and leading to the radial bearing surface portions (23A, 23B) for decoupling the adjacent radial gas cushions.

10. The aerodynamic bearing according to any one of the preceding claims 3 to 9,
further having at least one third venting channel (33) extending in the radial direction (R) through the spacer disk (11) to at least one of the axial bearing surfaces (13) for decoupling at least one of the axial gas cushions.

11. The aerodynamic bearing according to any one of the preceding claims,
wherein the combination bearing bush (30) is solid
and/or wherein the combination bearing bush is designed to dissipate heat from the axial bearing surface (13) and the radial bearing surface (23) radially outward and in particular to conduct it to a cooling medium and/or a heat sink.

12. The aerodynamic bearing according to any one of the preceding claims, further comprising the shaft sleeve (3) connected to the shaft (2) or further comprising the shaft (2) with the shaft sleeve (3) integrally formed thereon and/or materially connected thereto.

13. The aerodynamic bearing according to any one of the preceding claims 1 to 11,
further comprising the shaft sleeve (3) non-rotationally connected to the shaft (2) by a fastening element.

14. A turbo compressor with an aerodynamic bearing according to any one of the preceding claims,
having a receiving body (40) which defines a cylindrical receiving space (41) for receiving the combination bearing bush (30), further comprising retaining webs (42) extending in the radial direction (R) into the receiving space (41) and which are designed to hold the combination bearing bush (30) in the receiving space (40) concentrically to the rotation axis (R).

15. The turbo compressor according to the preceding claim,
wherein in the circumferential direction (U) between the retaining webs (42) and delimited radially inward by the combination bearing bush (30) at least one axial channel (43) is provided for homogenizing an ambient pressure prevailing around the combination bearing bush (30),
and/or wherein at least one circumferential channel (44) is provided, which intersects the retaining webs (42) in the circumferential direction (U) and which is delimited radially inward by the combination bearing bush (30), for homogenizing an ambient pressure prevailing around the combination bearing bush.

## Revendications

1. Palier aérodynamique (1) pour le montage axial et radial d'un arbre (2) s'étendant le long d'un axe de rotation (A) pour un turbocompresseur,
comprenant deux disques de palier axial (10) de forme annulaire ainsi qu'une douille de palier radial (20) en forme de cylindre creux,
dans lequel les deux disques de palier axial (10) et la douille de palier radial (20) sont disposés de manière concentrique par rapport à l'axe de rotation (A),
dans lequel les deux disques de palier axial (10) sont espacés dans la direction axiale et forment entre eux, dans la direction axiale, une cavité (12) destinée à loger un manchon d'arbre (3) relié à l'arbre (2),
dans lequel les deux disques de palier axial (10) présentent chacun une surface de palier axial (13) tournée vers la cavité (12) pour former un coussin de gaz axial respectif dans un entrefer de palier axial respectif entre la surface de palier axial (13) respective et le manchon d'arbre (3) pour le support axial de l'arbre (2),
dans lequel la douille de palier radial (20) présente, vers l'intérieur dans la direction radiale, une surface de palier radial (23) pour former un coussin de gaz radial dans un entrefer de palier radial entre la surface de palier radial (23) et l'arbre (2) pour le support radial de l'arbre (2),
dans lequel la douille de palier radial (20) est réalisée d'un seul tenant et/ou par liaison de matière avec l'un des disques de palier axial (10) sous la forme d'une douille de palier combiné (30), et
dans lequel la surface de palier axial (13) et la surface de palier radial (23) sur la douille de palier combiné (30) se raccordent via une zone de transition (35) entourant de manière concentrique l'axe de rotation (A),
**caractérisé en ce que**
le palier aérodynamique présente en outre au moins un premier canal d'évent (31) menant à la surface de palier axial (13) et à la surface de palier radial (23) de la douille de palier combiné (30) pour le découplage du coussin de gaz axial et du coussin de gaz radial, lequel canal mène à la zone de transition (35) via laquelle l'au moins un premier canal d'évent (31) est relié fluidiquement à la surface de palier axial (13) et à la surface de palier radial (23).

2. Palier aérodynamique selon la revendication 1,
dans lequel la douille de palier combiné (30) présente une forme de cylindre creux dont la longueur correspond à une longueur axiale commune de la douille de palier radial (20) et du disque de palier axial (10) et dont le rayon extérieur correspond à un rayon extérieur du disque de palier axial (10).

3. Palier aérodynamique selon la revendication 1 ou 2,
dans lequel une rondelle d'écartement (11) est disposée dans la direction axiale entre les deux disques de palier axial (10), laquelle rondelle est configurée pour maintenir les disques de palier axial (10) à une distance axiale prédéterminée l'un de l'autre et/ou pour limiter la cavité (12) dans la direction radiale (R), de sorte que le manchon d'arbre (3) supporté de manière conforme à sa destination entre les disques de palier axial (10) par les coussins de gaz axiaux est apte à tourner,
et dans lequel la rondelle d'écartement (11)est réalisée d'un seul tenant et/ou par liaison de matière avec la douille de palier combiné (30).

4. Palier aérodynamique selon l'une quelconque des revendications précédentes, dans lequel la zone de transition (35) est concave.

5. Palier aérodynamique selon l'une quelconque des revendications précédentes,
dans lequel la zone de transition (35) est réalisée sous la forme d'une gorge de dégagement.

6. Palier aérodynamique selon l'une quelconque des revendications précédentes,
dans lequel l'au moins un premier canal d'évent (31) mène de la surface de palier radial (23) à une surface d'enveloppe extérieure dans la direction radiale (36) et/ou à une face frontale axiale (37) de la douille de palier combiné (30).

7. Palier aérodynamique selon la revendication précédente,
dans lequel l'au moins un premier canal d'évent (31) est configuré pour maintenir une pression ambiante de la douille de palier combiné (30).

8. Palier aérodynamique selon l'une quelconque des revendications précédentes,
dans lequel la surface de palier radial (23) de la douille de palier combiné (30) est divisée en au moins deux sections de surface de palier radial (23A, 23B) espacées dans la direction axiale pour former un coussin de gaz radial respectif entre la section de surface de palier radial (23A, 23B) respective et l'arbre (2) pour le montage radial de l'arbre (2).

9. Palier aérodynamique selon la revendication précédente,
comprenant en outre au moins un deuxième canal d'évent (32) disposé en particulier entre respectivement deux sections de surface de palier radial (23A, 23B) et menant aux sections de surface de palier radial (23A, 23B) pour le découplage des coussins de gaz radiaux adjacents.

10. Palier aérodynamique selon l'une quelconque des revendications précédentes 3 à 9,
comprenant en outre au moins un troisième canal d'évent (33) s'étendant dans la direction radiale (R) à travers la rondelle d'écartement (11) jusqu'à au moins l'une des surfaces de palier axial (13) pour le découplage d'au moins l'un des coussins de gaz axiaux.

11. Palier aérodynamique selon l'une quelconque des revendications précédentes,
dans lequel la douille de palier combiné (30) est massive et/ou dans lequel la douille de palier combiné est configurée pour dissiper la chaleur depuis la surface de palier axial (13) et la surface de palier radial (23) vers l'extérieur dans la direction radiale et en particulier pour la conduire vers un milieu de refroidissement et/ou un dissipateur thermique.

12. Palier aérodynamique selon l'une quelconque des revendications précédentes,
comprenant en outre le manchon d'arbre (3) relié à l'arbre (2) ou comprenant en outre l'arbre (2) avec le manchon d'arbre (3) réalisé d'un seul tenant avec celui-ci et/ou relié à celui-ci par liaison de matière.

13. Palier aérodynamique selon l'une quelconque des revendications précédentes 1 à 11,
comprenant en outre le manchon d'arbre (3) relié de manière solidaire en rotation à l'arbre (2) par un élément de fixation.

14. Turbocompresseur comprenant un palier aérodynamique selon l'une quelconque des revendications précédentes,
comprenant un corps de logement (40) qui définit un espace de logement cylindrique (41) destiné à loger la douille de palier combiné (30), comprenant en outre des nervures de maintien (42) s'étendant dans la direction radiale (R) dans l'espace de logement (41), lesquelles nervures sont configurées pour maintenir la douille de palier combiné (30) dans l'espace de logement (40) de manière concentrique par rapport à l'axe de rotation (A).

15. Turbocompresseur selon la revendication précédente,
dans lequel est prévu, dans la direction circonférentielle (U) entre les nervures de maintien (42) et délimité vers l'intérieur dans la direction radiale par la douille de palier combiné (30), au moins un canal axial (43) pour l'homogénéisation d'une pression ambiante régnant autour de la douille de palier combiné (30),
et/ou dans lequel est prévu, coupant les nervures de maintien (42) dans la direction circonférentielle (U) et délimité vers l'intérieur dans la direction radiale par la douille de palier combiné (30), au moins un canal circonférentiel (44) pour l'homogénéisation d'une pression ambiante régnant autour de la douille de palier combiné.
